# EUROPÄISCHE PATENTSCHRIFT

(11) **EP 2 726 332 B1**
(45) Veröffentlichungstag und Bekanntmachung des Hinweises auf die Patenterteilung: **19.07.2017**
(21) Anmeldenummer: 12722369.1
(22) Anmeldetag: 21.05.2012
(51) Int. Cl.: B60S 1/38

(54) **WISCHVORRICHTUNG**
WIPING DEVICE
DISPOSITIF D'ESSUYAGE

(30) Priorität: 28.06.2011 DE 102011078174
(43) Veröffentlichungstag der Anmeldung: 07.05.2014
(73) Patentinhaber: Robert Bosch GmbH, 70442 Stuttgart (DE)
(72) Erfinder: HERINCKX, Dirk, B-3350 Linter (BE); DEPONDT, Helmut, B-3010 Kessel-Lo (BE); BEX, Koen, B-3890 Jeuk (BE)
(86) Internationale Anmeldenummer: PCT/EP2012/059361
(87) Internationale Veröffentlichungsnummer: WO 2013/000626

(56) Entgegenhaltungen:
- EP-A1- 1 795 406
- DE-A1- 10 036 115
- DE-A1-102008 001 045
- US-A1- 2010 293 737

## Beschreibung

### Stand der Technik

Es ist bereits eine Wischvorrichtung, insbesondere eine Kraftfahrzeugscheibenwischvorrichtung, mit einem Halteelement, das zumindest einen Längsführungskanal zur Führung zumindest eines Federelements aufweist, bekannt.

Aus der DE 100 36 115 A1 ist eine Wischvorrichtung mit einem Wischblattadapter und einem Wischblatt bekannt, welches ein Halteelement, ein Windabweiserelement, ein Federelement und eine Wischleiste umfasst. Um das Halteelement und das Federelement mit dem Wischblattadapter in einer vorbestimmten Position zu fixieren, weist das Halteelement sowie das Federelement jeweils drei Befestigungsausnehmungen auf, die in einer Seitenwandung des Halteelements und des Federelements angeordnet sind.

### Offenbarung der Erfindung

Die Erfindung geht aus von einer Wischvorrichtung, insbesondere einer Kraftfahrzeugscheibenwischvorrichtung, mit einem Halteelement, das zumindest einen Längsführungskanal zur Führung zumindest eines Federelements aufweist.

Es wird vorgeschlagen, dass das Halteelement zumindest drei, in Längsrichtung versetzte Befestigungsausnehmungen aufweist, die dazu vorgesehen sind, einen Formschluss mit einem Wischblattadapter zu bilden, wodurch eine besonders stabile Kopplung des Halteelements mit dem Wischblattadapter vorgenommen werden kann. Unter einem "Halteelement" soll dabei in diesem Zusammenhang insbesondere ein Element verstanden werden, das dazu vorgesehen ist, ein Windabweiserelement, ein Federelement und eine Wischleiste fornischlüssig zu verbinden. Unter "in Längsrichtung versetzten Befestigungsausnehmungen" soll in diesem Zusammenhang insbesondere verstanden werden, dass zumindest eine Ebene existiert, die sich senkrecht zur Längsrichtung erstreckt und genau eine der Befestigungsausnehmungen schneidet. Bevorzugt sind die Befestigungsausnehmungen, in Längsrichtung betrachtet, voneinander beabstandet. Zwischen den Befestigungsausnehmungen ist jeweils ein befestigungsausnehmungsfreier Bereich angeordnet, in welchem eine Ebene, die sich senkrecht zur Längsrichtung erstreckt, keine Befestigungsausnehmung schneidet. Unter einem "Windabweiserelement" soll in diesem Zusammenhang insbesondere ein Element verstanden werden, das dazu vorgesehen ist, einen auf die Wischvorrichtung wirkenden Fahrtwind abzuweisen und/oder für ein Anpressen einer Wischleiste auf eine Fahrzeugscheibe zu nutzen. Unter einer "Wischleiste" soll in diesem Zusammenhang insbesondere eine Leiste verstanden werden, die dazu vorgesehen ist, eine Fahrzeugscheibe zu wischen. Unter einem "Federelement" soll in diesem Zusammenhang insbesondere ein federelastisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einer "Längsrichtung" soll in diesem Zusammenhang insbesondere eine Richtung verstanden werden, die sich im Wesentlichen parallel zu einer Längserstreckung des Halteelements erstreckt. Unter einer "Längserstreckung" soll in diesem Zusammenhang insbesondere eine größtmögliche Erstreckung verstanden werden. Unter "im Wesentlichen" soll in diesem Zusammenhang insbesondere eine Abweichung von weniger als 10°, bevorzugt weniger als 5°, verstanden werden. Unter einer "Erstreckung" eines Elements soll in diesem Zusammenhang insbesondere ein maximaler Abstand zweier Punkte einer senkrechten Projektion des Elements auf eine Ebene verstanden werden. Unter einem "Längsführungskanal" soll in diesem Zusammenhang insbesondere ein Führungskanal verstanden werden, der sich parallel zu einer Längsrichtung des Halteelements erstreckt. Bevorzugt umfasst der Längsführungskanal einen Freiraum sowie zumindest eine den Freiraum begrenzende Kanalwand. Unter einer "Befestigungsausnehmung" soll in diesem Zusammenhang insbesondere eine Ausnehmung verstanden werden, die dazu vorgesehen ist, ein korrespondierendes Befestigungselement aufzunehmen. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Wischarmadapter bereitzustellen. Unter "vorgesehen" soll insbesondere speziell ausgelegt und/oder ausgestattet verstanden werden. Erfindungsgemäß wird vorgeschlagen, dass die Befestigungsausnehmungen zumindest teilweise in einem Windabweiserbefestigungselement angeordnet sind, das dazu vorgesehen ist, einen Formschluss mit einem Windabweiserelement zu bilden, wodurch eine besonders schmale und stabile Bauweise der Wischvorrichtung erreicht werden kann. Das Windabweiserbefestigungselement ist vorzugsweise hakenförmig ausgebildet. Besonders bevorzugt schließt das Windabweiserbefestigungselement das Halteelement in einer wischleistenabgewandten Seite ab.

Es wird ferner vorgeschlagen, dass die Befestigungsausnehmungen zumindest teilweise in einer Seitenwandung, die den Längsführungskanal seitlich begrenzt, angeordnet sind, wodurch eine besonders einfache und flache Bauweise der Wischvorrichtung erreicht werden kann. Unter "seitlich" soll in diesem Zusammenhang insbesondere in eine Wischrichtung betrachtet verstanden werden. Unter einer "Wischrichtung" soll in diesem Zusammenhang insbesondere eine Richtung verstanden werden, in welche sich die Wischvorrichtung in einem Betriebszustand relativ zu einer zu wischenden Oberfläche bewegt. Bevorzugt erstreckt sich die Wischrichtung parallel zu einer zu wischenden Oberfläche und/oder senkrecht zu einer Hauptausrichtung der Wischleiste.

Des Weiteren wird vorgeschlagen, dass die Wischvorrichtung einen Wischblattadapter umfasst, der dazu vorgesehen ist, mit dem Halteelement gekoppelt zu werden, wodurch eine einfache Montage der Wischvorrichtung mit einem Wischarmadapter erreicht werden kann.

Ferner wird vorgeschlagen, dass der Wischblattadapter zumindest ein Rastelement aufweist, welches am Halteelement in einem montierten Zustand an einer wischleistenzugewandten Seite anliegt und dazu vorgesehen ist, eine Bewegung des Wischblattadapters relativ zum Halteelement in eine Vertikalrichtung zu vermeiden, wodurch vorteilhaft eine schnelle und sichere Montage der Wischvorrichtung erreicht werden kann. Unter einem "Rastelement" soll in diesem Zusammenhang insbesondere ein federelastisches Element zur Herstellung einer Rastverbindung verstanden werden, das dazu vorgesehen ist, bei einer Montage elastisch ausgelenkt zu werden.

Umfasst der Wischblattadapter zumindest ein Rastelement, welches am Halteelement in einem montierten Zustand seitlich anliegt und dazu vorgesehen ist, eine Bewegung des Wischblattadapters relativ zum Halteelement in eine Längsrichtung des Halteelements zu vermeiden, kann vorteilhaft eine schnelle und sichere Montage der Wischvorrichtung erreicht werden.

Ferner wird vorgeschlagen, dass das Rastelement am Federelement in einem montierten Zustand seitlich anliegt und dazu vorgesehen ist, eine Bewegung des Wischblattadapters relativ zum Federelement in eine Längsrichtung zu vermeiden, wodurch zusätzliche Federelementhalterungen vermieden werden können und/oder Gewicht eingespart werden kann.

In einer weiteren Ausgestaltung der Erfindung wird vorgeschlagen, dass das Rastelement dazu vorgesehen ist, bei einer Montage zumindest im Wesentlichen in eine Wischrichtung ausgelenkt zu werden, wodurch eine besonders kompakte Bauform bei gleichzeitig hoher Betriebssicherheit erreicht werden kann.

Weist das Rastelement zumindest zwei Rastarme auf, die mit dem Wischblattadapter verbunden und dazu vorgesehen sind, federelastisch ausgelenkt zu werden, kann das Rastelement besonders stabil und belastbar ausgebildet werden.

### Zeichnungen

Weitere Vorteile ergeben sich aus der folgenden Zeichnungsbeschreibung. In der Zeichnung sind sechs Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer erfindungsgemäßen Wischvorrichtung mit einem Halteelement,
- Fig. 2: eine Schnittdarstellung des Halteelements nach Figur 1,
- Fig. 3: eine Seitenansicht des Halteelements nach Figur 1,
- Fig. 4: eine perspektivische Ansicht eines Wischblattadapters und des Halteelements nach Figur 1,
- Fig. 5: eine weitere perspektivische Ansicht des Wischblattadapters und des Halteelements nach Figur 1,
- Fig. 6: eine perspektivische Ansicht eines weiteren Ausführungsbeispiels einer erfindungsgemäßen Wischvorrichtung mit einem Halteelement,
- Fig. 7: eine Draufsicht auf das Haltelement nach Figur 6,
- Fig. 8: eine perspektivische Ansicht eines Wischblattadapters und eines Federelements der Wischvorrichtung nach Figur 6,
- Fig. 9: eine perspektivische Ansicht des Wischblattadapters und des Halteelements der Wischvorrichtung nach Figur 6,
- Fig. 10: eine perspektivische Ansicht des Wischblattadapters der Wischvorrichtung nach Figur 6,
- Fig. 11: eine perspektivische Ansicht eines Wischblattadapters und eines Federelements eines weiteren Ausführungsbeispiels einer Wischvorrichtung,
- Fig. 12: eine perspektivische Ansicht des Wischblattadapters und eines Halteelements der Wischvorrichtung nach Figur 11,
- Fig. 13: eine perspektivische Ansicht eines Wischblattadapters und eines Federelements eines weiteren Ausführungsbeispiels einer Wischvorrichtung,
- Fig. 14: eine perspektivische Ansicht des Wischblattadapters und eines Halteelements der Wischvorrichtung nach Figur 13,
- Fig. 15: eine perspektivische Ansicht eines Wischblattadapters eines weiteren Ausführungsbeispiels einer Wischvorrichtung,
- Fig. 16: eine perspektivische Ansicht des Wischblattadapters und eines Federelements der Wischvorrichtung nach Figur 15,
- Fig. 17: eine perspektivische Ansicht des Wischblattadapters und eines Halteelements der Wischvorrichtung nach Figur 15,
- Fig. 18: eine perspektivische Ansicht eines Wischblattadapters eines weiteren Ausführungsbeispiels einer Wischvorrichtung,
- Fig. 19: eine perspektivische Ansicht des Wischblattadapters und eines Federelements der Wischvorrichtung nach Figur 18 und
- Fig. 20: eine perspektivische Ansicht des Wischblattadapters und eines Halteelements der Wischvorrichtung nach Figur 18.

### Beschreibung der Ausführungsbeispiele

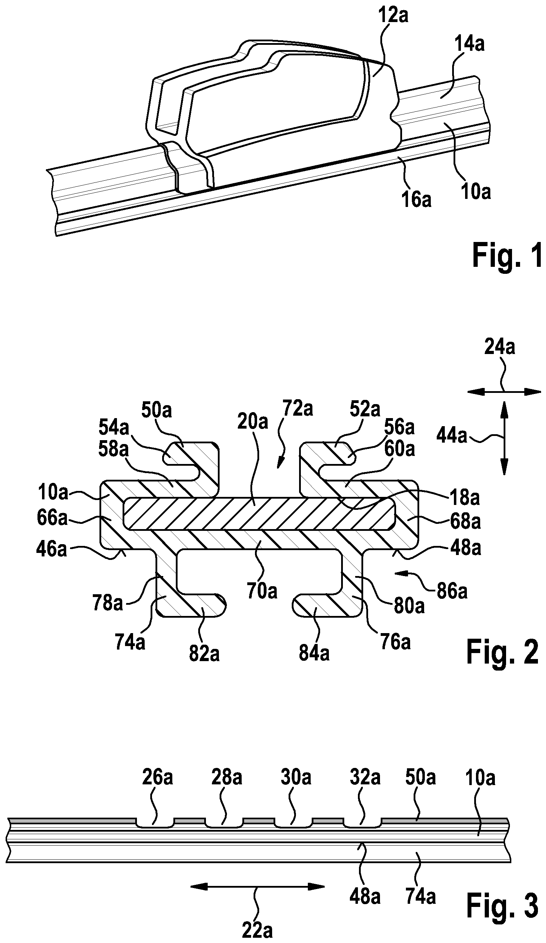

Figur 1 zeigt eine perspektivische Ansicht einer erfindungsgemäßen Wischvorrichtung mit einem Halteelement 10a, einem Wischblattadapter 12a, einem Windabweiserelement 14a und einer Wischleiste 16a in einem montierten Zustand. Der Wischblattadapter 12a, das Windabweiserelement 14a und die Wischleiste 16a sind am Halteelement 10a befestigt. Der Wischblattadapter 12a ist dazu vorgesehen, mit einem Wischerarm (nicht dargestellt) gekoppelt zu werden. Über das Halteelement 10a wird die Wischleiste 16a in einem Betriebszustand, d.h. wenn der Wischerarm eine Wischbewegung ausführt, über eine zu wischende Oberfläche (nicht dargestellt) bewegt. Bei einem Auftreffen von Fahrtwind weist das Windabweiserelement 14a diesen ab und presst die Wischvorrichtung auf die zu wischende Oberfläche.

Figur 2 zeigt das Halteelement 10a, das einen Längsführungskanal 18a zur Führung eines Federelements 20a aufweist, in einer Schnittdarstellung. Die Schnittebene verläuft senkrecht zu einer Längsrichtung 22a des Halteelements 10a. Das Halteelement 10a weist zwei Windabweiserbefestigungselemente 50a, 52a auf. Die Windabweiserbefestigungselemente 50a, 52a sind einstückig mit dem Halteelement 10a ausgebildet. Die Windabweiserbefestigungselemente 50a, 52a weisen an ihren freien Enden 54a, 56a in voneinander abgewandte Richtungen. Ferner bilden die Windabweiserbefestigungselemente 50a, 52a zwei Kanalwandungen 58a, 60a, die an den Längsführungskanal 18a an einer wischleistenabgewandten Seite angrenzen. Die Windabweiserbefestigungselemente 50a, 52a sind im Bereich ihrer freien Enden 54a, 56a widerhakenförmig ausgebildet. Die Enden 54a, 56a sind in einem montierten Zustand von dem Windabweiserelement 14a umschlossen.

Zur Führung des Federelements 20a grenzen Seitenwandungen 66a, 68a des Längsführungskanals 18c an die Kanalwandungen 58a, 60a. Die Kanalwandungen 58a, 60a schließen dabei einen rechten Winkel mit den Seitenwandungen 66a, 68a ein. An die Seitenwandungen 66a, 68a ist ferner eine Zwischenwandung 70a angeordnet, die den Längsführungskanal 18a in Richtung der Wischleiste 16a abschließt. Die Seitenwandungen 66a, 68a erstrecken sich von der Zwischenwandung 70a aus in eine von der Wischleiste 16a abgewandte Richtung. Das Halteelement 10a weist eine Längsöffnung 72a auf, die den Längsführungskanal 18a zum Windabweiserelement 14a hin öffnet.

An der Zwischenwandung 70a sind zwei L-förmige Führungsprofile 74a, 76a des Halteelements 10a angeordnet. Die Führungsprofile 74a, 76a sind einstückig mit dem Halteelement 10a ausgebildet. Die Führungsprofile 74a, 76a weisen jeweils eine Seitenführung 78a, 80a und jeweils eine Vertikalführung 82a, 84a auf. Die Vertikalführungen 82a, 84a schließen mit den Seitenführungen 78a, 80a jeweils einen Winkel von 90° ein. Die Seitenführungen 78a, 80a schließen jeweils einen Winkel von 90° zur Zwischenwandung 70a ein. Die Führungsprofile 74a, 76a weisen an ihren freien Enden der Vertikalführungen 82a, 84a in einander zugewandte Richtungen. Die Führungsprofile 74a, 76a und die Zwischenwandung 70a bilden eine Kederschiene 86a, in welche die Wischleiste 16a in einem montierten Zustand eingeführt ist.

Das Halteelement 10a ist in einem Extrusionsverfahren einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid, Polycarbonat und/oder Polystyrol.

Das Halteelement 10a weist vier, in Längsrichtung 22a versetzte Befestigungsausnehmungen 26a, 28a, 30a, 32a auf, die dazu vorgesehen sind, einen Formschluss mit dem Wischblattadapter 12a zu bilden. Die Befestigungsausnehmungen 26a, 28a, 30a, 32a sind in den Windabweiserbefestigungselementen 50a, 52a angeordnet, die dazu vorgesehen sind, einen Formschluss mit einem Windabweiserelement 14a zu bilden. Die Befestigungsausnehmungen 26a, 28a, 30a, 32a erstrecken sich, in eine Wischrichtung 24a betrachtet, durchgehend durch beide Windabweiserbefestigungselemente 50a, 52a (Figur 3).

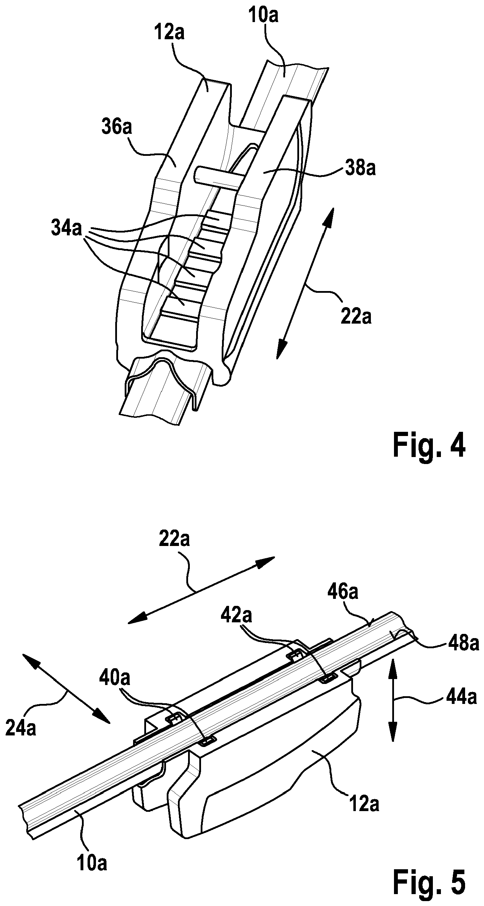

Zu einer Montage wird der Wischblattadapter 12a auf das Halteelement 10a aufgesetzt (Figur 4). Der Wischblattadapter 12a weist vier Brückenstege 34a auf, die sich von einer Seitenwandung 36a des Wischblattadapters 12a zu einer, in Wischrichtung betrachtet, gegenüberliegenden Seitenwandung 38a des Wischblattadapters 12a erstrecken. Die Brückenstege 34a erstrecken sich in ihrer Haupterstreckung parallel zur Wischrichtung 24a. Bei einer Montage greifen die Brückenstege 34a formschlüssig in die Befestigungsausnehmungen 26a, 28a, 30a, 32a ein und füllen diese vollständig aus. Eine Bewegung des Wischblattadapters 12a relativ zum Halteelement 10a ist somit in Längsrichtung 22a und in Wischrichtung 24a vermieden.

Der Wischblattadapter 12a weist vier Rastelemente 40a, 42a auf, welche am Halteelement 10a im montierten Zustand an einer wischleistenzugewandten Seite 46a, 48a anliegen und dazu vorgesehen sind, eine Bewegung des Wischblattadapters 12a relativ zum Halteelement 10a in eine Vertikalrichtung 44a zu vermeiden (Figur 5). Die Vertikalrichtung 44a erstreckt sich senkrecht zur Längsrichtung 22a und senkrecht zur Wischrichtung 24a. Somit steht die Vertikalrichtung 44a in einem Betriebszustand zumindest im Wesentlichen senkrecht zu einer zu wischenden Oberfläche (nicht dargestellt). Die Rastelemente 40a, 42a werden bei einer Montage zunächst aus einer Ausgangsposition heraus in Wischrichtung 24a federelastisch ausgelenkt und bewegen sich anschließend selbstständig in die Ausgangsposition zurück. Eine Bewegung des Wischblattadapters 12a relativ zum Halteelement 10a ist somit in Vertikalrichtung 44a vermieden.

Zuletzt wird bei einer Montage das Federelement 20a in den Längsführungskanal 18a in Längsrichtung 22a eingeschoben. Das Windabweiserelement 14a wird in Längsrichtung 22a über die Windabweiserbefestigungselemente 50a, 52a geschoben und ist somit ebenfalls mit dem Halteelement 10a verbunden.

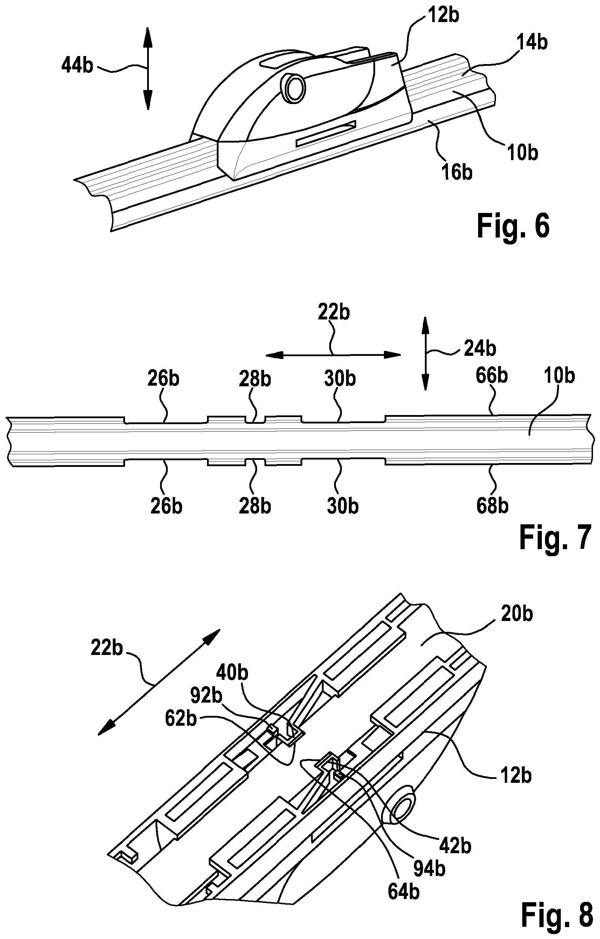

In den Figuren 6 bis 20 sind fünf weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in den Figuren 1 bis 5 durch die Buchstaben b bis f in den Bezugszeichen der Ausführungsbeispiele der Figuren 6 bis 20 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

Figur 6 zeigt eine perspektivische Ansicht eines weiteren Ausführungsbeispiels einer erfindungsgemäßen Wischvorrichtung mit einem Halteelement 10b, einem Wischblattadapter 12b, einem Windabweiserelement 14b und einer Wischleiste 16b in einem montierten Zustand. Der Wischblattadapter 12b, das Windabweiserelement 14b und die Wischleiste 16b sind am Halteelement 10b befestigt. Der Wischblattadapter 12b ist dazu vorgesehen, mit einem Wischerarm (nicht dargestellt) gekoppelt zu werden. Über das Halteelement 10b wird die Wischleiste 16b in einem Betriebszustand, d.h. wenn der Wischerarm eine Wischbewegung ausführt, über eine zu wischende Oberfläche (nicht dargestellt) bewegt. Bei einem Auftreffen von Fahrtwind weist das Windabweiserelement 14b diesen ab und presst die Wischvorrichtung auf die zu wischende Oberfläche. Das Halteelement 10b weist einen wie in Figur 2 gezeigten Querschnitt auf.

Figur 7 zeigt eine Draufsicht auf das Halteelement 10b. Das Halteelement 10b weist, in Wischrichtung 24b betrachtet, beidseitig drei, in eine Längsrichtung 22b versetzte Befestigungsausnehmungen 26b, 28b, 30b auf, die dazu vorgesehen sind, einen Formschluss mit dem Wischblattadapter 12b zu bilden. Die Befestigungsausnehmungen 26b, 28b, 30b sind in Seitenwandungen 66b, 68b, die einen Längsführungskanal 18b seitlich begrenzen, angeordnet.

Der Wischblattadapter 12b weist zwei Rastelemente 40b, 42b auf, welche in einem montierten Zustand seitlich am Federelement 20b anliegen und eine Bewegung des Wischblattadapters 12b relativ zum Federelement 20b in Längsrichtung 22b vermeiden (Figur 8). Der Übersichtlichkeit halber ist in Figur 8 das Halteelement 10b nicht dargestellt. Die Rastelemente 40b, 42b greifen dabei in seitlich im Federelement 20b angeordnete Rastausnehmungen 62b, 64b.

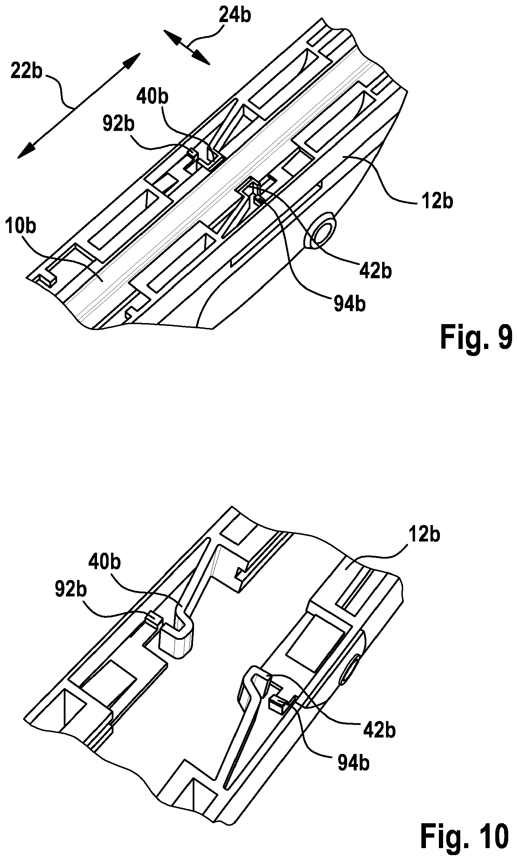

Die Rastelemente 40b, 42b liegen in einem montierten Zustand ebenfalls seitlich am Halteelement 10b an (Figur 9). Die Rastelemente 40b, 42b greifen dabei in die Befestigungsausnehmungen 28b und vermeiden somit auch eine Bewegung des Wischblattadapters 12b relativ zum Halteelement 10b in die Längsrichtung 22b. Ferner greift der Wischblattadapter 12b in die Befestigungsausnehmungen 26b, 30b ein und bildet so einen weiteren, in Längsrichtung 22b wirkenden Formschluss.

Die Rastelemente 40b, 42b werden bei einer Montage zunächst aus einer Ausgangsposition heraus in Wischrichtung 24b federelastisch ausgelenkt und bewegen sich anschließend selbstständig in die Ausgangsposition zurück. Dabei greifen zwei Sicherungsmittel 92b, 94b des Wischblattadapters 12b seitlich jeweils an ein Rastelement 40b, 42b und vermeiden ein erneutes Auslenken der Rastelemente 40b, 42b. Die Sicherungsmittel 92b, 94b lassen sich ausschließlich in eine Vertikalrichtung 44b auslenken. Sollen die Rastelemente 40b, 42b ausgelenkt werden, müssen zunächst die Sicherungsmittel 92b, 94b ausgelenkt werden (Figur 10).

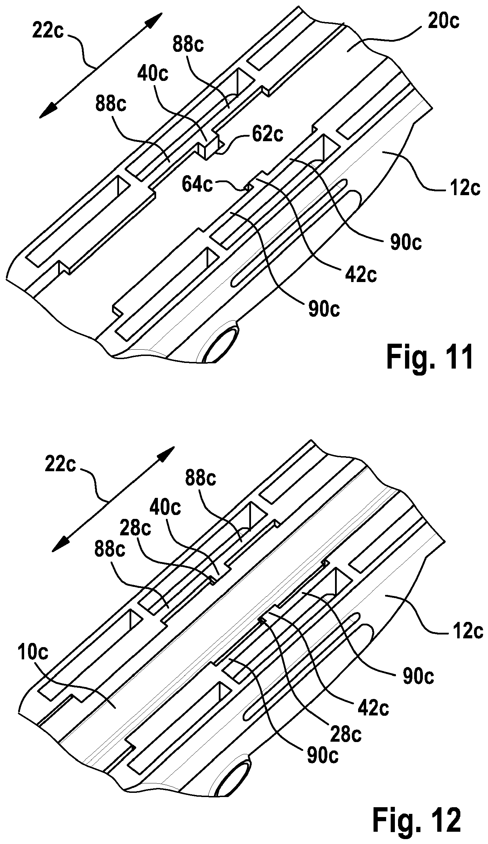

Figur 11 zeigt ein weiteres Ausführungsbeispiel der Erfindung, das im Wesentlichen dem in den Figuren 6 bis 10 gezeigten Ausführungsbeispiel entspricht. Zwei an einem Wischblattadapter 12c angeordnete Rastelemente 40c, 42c weisen jeweils zwei Rastarme 88c, 90c auf, die mit dem Wischblattadapter 12c verbunden sind. Die Rastarme 88c, 90c erstrecken sich jeweils in eine Längsrichtung 22c eines Halteelements 10c. Die Rastarme 88c, 90c sind einstückig mit dem Wischblattadapter 12c ausgebildet und lassen sich in eine Wischrichtung 24c federelastisch auslenken. Ferner sind die Rastarme 88c, 90c aus einem Kunststoff hergestellt. Im montierten Zustand liegen die Rastelemente 40c, 42c seitlich an einem Federelement 20c an und vermeiden eine Bewegung des Wischblattadapters 12c relativ zum Federelement 20c in Längsrichtung 22c. Das Halteelement 10c ist in Figur 11 der Übersichtlichkeit halber nicht dargestellt.

Figur 12 zeigt eine perspektivische Ansicht des Wischblattadapters 12c mit dem Halteelement 10c. Die Rastelemente 40c, 42c liegen in einem montierten Zustand seitlich am Halteelement 10c an. Die Rastelemente 40c, 42c greifen dabei in Befestigungsausnehmungen 28c und vermeiden eine Bewegung des Wischblattadapters 12c relativ zum Halteelement 10c in Längsrichtung 22c.

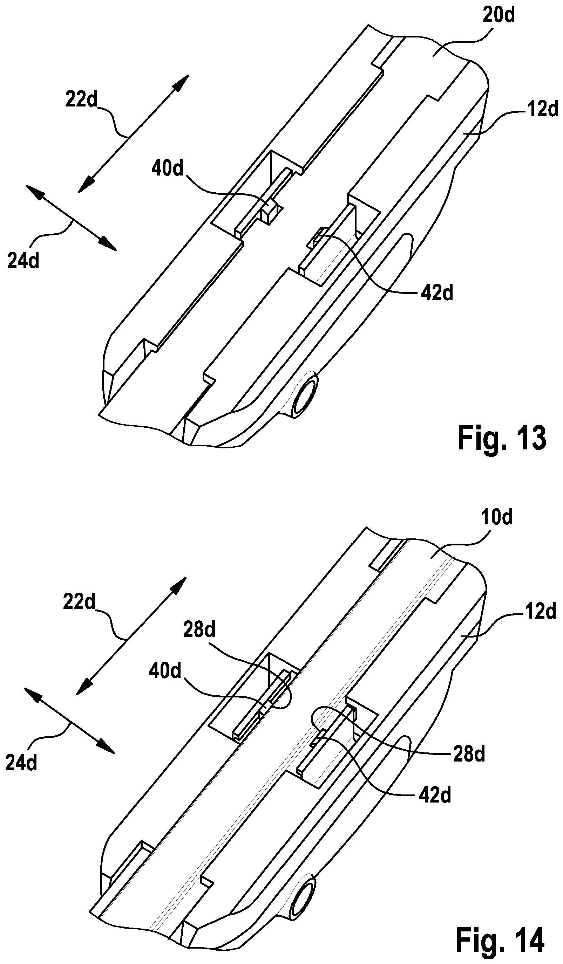

Figur 13 zeigt ein weiteres Ausführungsbeispiel der Erfindung, das im Wesentlichen dem in den Figuren 6 bis 10 gezeigten Ausführungsbeispiel entspricht. Zwei an einem Wischblattadapter 12d angeordnete Rastelemente 40d, 42d sind um eine Längsachse auslenkbar, die sich parallel zu einer Längsrichtung 22d erstreckt. Die Rastelemente 40d, 42d werden bei einer Montage zunächst aus einer Ausgangsposition heraus in eine Wischrichtung 24d federelastisch ausgelenkt und bewegen sich anschließend selbstständig in die Ausgangsposition zurück. Im montierten Zustand liegen die Rastelemente 40d, 42d seitlich an einem Federelement 20d an und vermeiden eine Bewegung des Wischblattadapters 12d relativ zum Federelement 20d in Längsrichtung 22d. Ein Halteelement 10d ist in Figur 13 der Übersichtlichkeit halber nicht dargestellt.

Figur 14 zeigt eine perspektivische Ansicht des Wischblattadapters 12d mit dem Halteelement 10d. Die Rastelemente 40d, 42d liegen in einem montierten Zustand seitlich am Halteelement 10d an. Die Rastelemente 40d, 42d greifen dabei in Befestigungsausnehmungen 28d und vermeiden eine Bewegung des Wischblattadapters 12d relativ zum Halteelement 10d in Längsrichtung 22d.

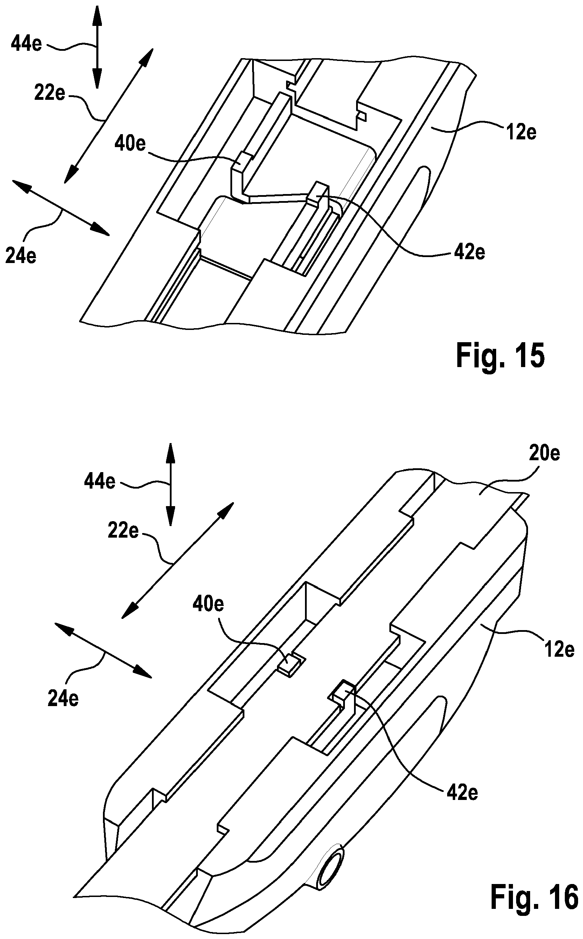

Figur 15 zeigt ein weiteres Ausführungsbeispiel der Erfindung, das im Wesentlichen dem in den Figuren 6 bis 10 gezeigten Ausführungsbeispiel entspricht. Zwei an einem Wischblattadapter 12e angeordnete Rastelemente 40e, 42e sind um eine Längsachse auslenkbar, die sich parallel zu einer Längsrichtung 22e erstreckt. Die Rastelemente 40e, 42e erstrecken sich im Wesentlichen in eine Wischrichtung 24e und werden bei einer Montage zunächst aus einer Ausgangsposition heraus in eine Vertikalrichtung 44e federelastisch ausgelenkt und bewegen sich anschließend selbstständig in die Ausgangsposition zurück.

Im montierten Zustand liegen die Rastelemente 40e, 42e seitlich an einem Federelement 20e an und vermeiden eine Bewegung des Wischblattadapters 12e relativ zum Federelement 20e in Längsrichtung 22e (Figur 16). Ein Halteelement 10e ist in Figur 16 der Übersichtlichkeit halber nicht dargestellt.

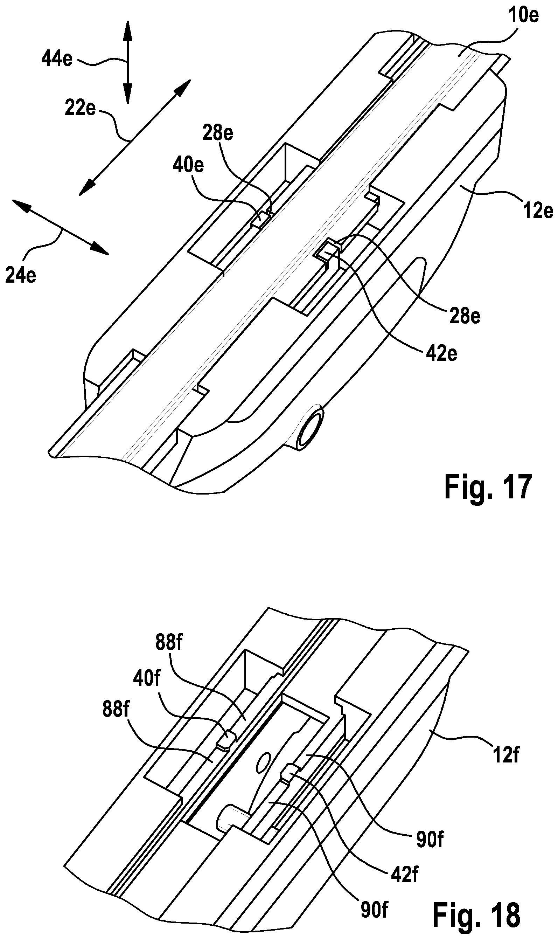

Figur 17 zeigt eine perspektivische Ansicht des Wischblattadapters 12e mit dem Halteelement 10e. Die Rastelemente 40e, 42e liegen in einem montierten Zustand seitlich am Halteelement 10e an. Die Rastelemente 40e, 42e greifen dabei in Befestigungsausnehmungen 28e und vermeiden eine Bewegung des Wischblattadapters 12e relativ zum Halteelement 10e in Längsrichtung 22e.

Figur 18 zeigt ein weiteres Ausführungsbeispiel der Erfindung, das im Wesentlichen dem in den Figuren 6 bis 10 gezeigten Ausführungsbeispiel entspricht. Zwei an einem Wischblattadapter 12f angeordnete Rastelemente 40f, 42f weisen jeweils zwei Rastarme 88f, 90f auf, die mit dem Wischblattadapter 12f verbunden sind. Die Rastarme 88f, 90f erstrecken sich jeweils in eine Längsrichtung 22f eines Halteelements 10f. Die Rastarme 88f, 90f sind einstückig mit dem Wischblattadapter 12f ausgebildet und lassen sich in Vertikalrichtung 44f federelastisch auslenken. Ferner sind die Rastarme 88f, 90f aus einem Kunststoff hergestellt.

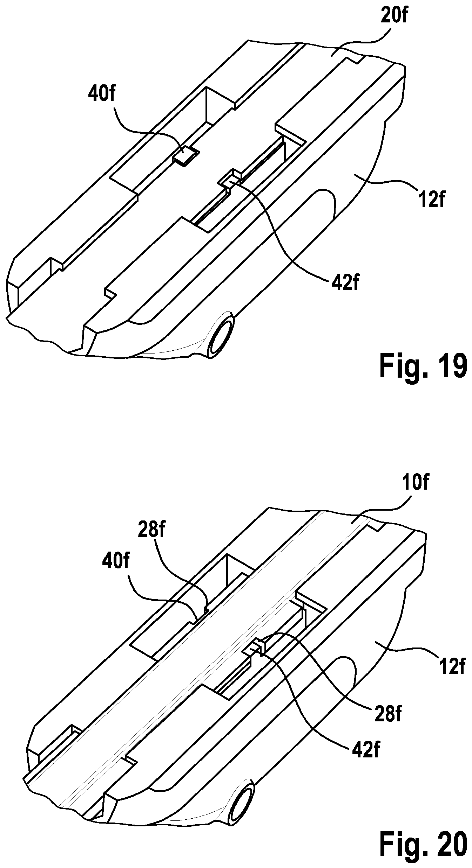

Im montierten Zustand liegen die Rastelemente 40f, 42f an einer wischleistenabgewandten Seite eines Federelements 20f an und vermeiden eine Bewegung des Wischblattadapters 12f relativ zum Federelement 20f in Längsrichtung 22f (Figur 19). Das Halteelement 10f ist in Figur 19 der Übersichtlichkeit halber nicht dargestellt.

Figur 20 zeigt eine perspektivische Ansicht des Wischblattadapters 12f mit dem Halteelement 10f. Die Rastelemente 40f, 42f liegen in einem montierten Zustand an einer wischleistenabgewandten Seite am Halteelement 10f an. Die Rastelemente 40f, 42f greifen dabei in Befestigungsausnehmungen 28f und vermeiden eine Bewegung des Wischblattadapters 12f relativ zum Halteelement 10f in Längsrichtung 22f.

## Patentansprüche

1. Wischvorrichtung, insbesondere Kraftfahrzeugscheibenwischvorrichtung, mit einem Halteelement (10a -10f), das zumindest einen Längsführungskanal (18a -18f) zur Führung zumindest eines Federelements (20a - 20f) aufweist und mit einem Wischblattadapter (12a -12f), der dazu vorgesehen ist, mit dem Halteelement (10a - 10f) gekoppelt zu werden, wobei das Halteelement (10a - 10f) zumindest drei, in Längsrichtung (22a - 22f) versetzte Befestigungsausnehmungen (26a - 26f, 28a - 28f, 30a - 30f, 32a) aufweist, die dazu vorgesehen sind, einen Formschluss mit dem Wischblattadapter (12a -12f) zu bilden, **dadurch gekennzeichnet, dass** die Befestigungsausnehmungen (26a, 28a, 30a, 32a) zumindest teilweise in einem Windabweiserbefestigungselement (50a, 52a) angeordnet sind, das dazu vorgesehen ist, einen Formschluss mit einem Windabweiserelement (14a) zu bilden.

2. Wischvorrichtung nach Anspruch 1, **dadurch gekennzeichnet, dass** die Befestigungsausnehmungen (26b - 26f, 28b - 28f, 30b - 30f) zumindest teilweise in einer Seitenwandung (66b - 66f), die den Längsführungskanal (18b -18f) seitlich begrenzt, angeordnet sind.

3. Wischvorrichtung zumindest nach Anspruch 1, **dadurch gekennzeichnet, dass** der Wischblattadapter (12a) zumindest ein Rastelement (40a, 42a) aufweist, welches am Halteelement (10a) in einem montierten Zustand an einer wischleistenzugewandten Seite (46a, 48a) anliegt und dazu vorgesehen ist, eine Bewegung des Wischblattadapters (12a) relativ zum Halteelement (10a) in eine Vertikalrichtung (44a) zu vermeiden.

4. Wischvorrichtung zumindest nach Anspruch 1, **dadurch gekennzeichnet, dass** der Wischblattadapter (12b -12f) zumindest ein Rastelement (40b - 40f, 42b - 42f) aufweist, welches am Halteelement (10b - 10f) in einem montierten Zustand seitlich anliegt und dazu vorgesehen ist, eine Bewegung des Wischblattadapters (12b -12f) relativ zum Halteelement (10b -10f) in eine Längsrichtung (22b - 22f) des Halteelements (10b - 10f) zu vermeiden.

5. Wischvorrichtung nach Anspruch4, **dadurch gekennzeichnet, dass** das Rastelement (40b - 40f, 42b - 42f) am Federelement (20b - 20f) in einem montierten Zustand seitlich anliegt und dazu vorgesehen ist, eine Bewegung des Wischblattadapters (12b -12f) relativ zum Federelement (20b - 20f) in eine Längsrichtung (22b - 22f) zu vermeiden.

6. Wischvorrichtung zumindest nach Anspruch 4, **dadurch gekennzeichnet, dass** das Rastelement (40b - 40d, 42b - 42d) dazu vorgesehen ist, bei einer Montage zumindest im Wesentlichen in eine Wischrichtung (24b - 24d) ausgelenkt zu werden.

7. Wischvorrichtung zumindest nach Anspruch 4, **dadurch gekennzeichnet, dass** das Rastelement (40c; 40f, 42c; 42f) zumindest zwei Rastarme (88c; 88f, 90c; 90f) aufweist, die mit dem Wischblattadapter (12c; 12f) verbunden und dazu vorgesehen sind, federelastisch ausgelenkt zu werden.

## Claims

1. Wiper device, particularly a motor vehicle windscreen wiper device, having a retaining element (10a
- 10f) comprising at least one longitudinal guide channel (18a - 18f) for guiding at least one spring element (20a
- 20f), and having a wiper blade adapter (12a - 12f),
which is provided to be connected to the retaining element (10a - 10f), wherein the retaining element (10a - 10f) comprises at least three fastening recesses (26a - 26f, 28a - 28f, 30a - 30f, 32a) offset in a longitudinal direction (22a - 22f), which are provided to interlock with the wiper blade adapter (12a - 12f), **characterized in that** the fastening recesses (26a, 28a, 30a, 32a) are arranged at least partially in a wind deflector fastening element (50a, 52a) which is provided to interlock with a wind deflector element (14a).

2. Wiper device according to Claim 1, **characterized in that** the fastening recesses (26b - 26f, 28b - 28f, 30b - 30f) are arranged at least partially in a side wall (66b
- 66f) which delimits the longitudinal guide channel (18b
- 18f) laterally.

3. Wiper device at least according to Claim 1, **characterized in that** the wiper blade adapter (12a) comprises at least one latching element (40a, 42a), which bears laterally against the retaining element (10a) in a mounted state on a side facing the wiper strip (46a, 48a) and is provided to prevent movement of the wiper blade adapter (12a) relative to the retaining element (10a) in a vertical direction (44a).

4. Wiper device at least according to Claim 1, **characterized in that** the wiper blade adapter (12b - 12f) comprises at least one latching element (40b - 40f, 42b - 42f), which bears laterally against the retaining element (10b - 10f) in a mounted state and is provided to prevent movement of the wiper blade adapter (12b - 12f) relative to the retaining element (10b - 10f) in a longitudinal direction (22b - 22f) of the retaining element (10b - 10f).

5. Wiper device according to Claim 4, **characterized in that** the latching element (40b - 40f, 42b - 42f) bears laterally against the spring element (20b - 20f) in a mounted state and is provided to avoid movement of the wiper blade adapter (12b - 12f) relative to the spring element (20b - 20f) in a longitudinal direction (22b - 22f).

6. Wiper device at least according to Claim 4, **characterized in that** the latching element (40b - 40d, 42b - 42d) is provided to be deflected at least substantially in a wiping direction (24b - 24d) in an assembly.

7. Wiper device at least according to Claim 4, **characterized in that** the latching element (40c; 40f, 42c; 42f) comprises at least two latching arms (88c; 88f, 90c; 90f) which are connected to the wiper blade adapter (12c; 12f) and are provided to be resiliently deflected.

## Revendications

1. Dispositif d'essuyage, en particulier dispositif d'essuyage de véhicule automobile, comprenant un élément de retenue (10a - 10f) qui présente au moins un conduit de guidage longitudinal (18a - 18f) pour le guidage d'au moins un élément de ressort (20a - 20f) et comprenant un adaptateur de balai d'essuie-glace (12a - 12f), qui est prévu pour être accouplé à l'élément de retenue (10a - 10f), l'élément de retenue (10a - 10f) présentant au moins trois évidements de fixation (26a - 26f, 28a - 28f, 30a - 30f, 32a) décalés dans la direction longitudinale (22a - 22f), qui sont prévus pour constituer un engagement par correspondance de formes avec l'adaptateur de balai d'essuie-glace (12a - 12f), **caractérisé en ce que** les évidements de fixation (26a, 28a, 30a, 32a) sont disposés au moins en partie dans un élément de fixation de déflecteur de vent (50a, 52a) qui est prévu pour constituer un engagement par correspondance de formes avec un élément de déflecteur de vent (14a).

2. Dispositif d'essuyage selon la revendication 1, **caractérisé en ce que** les évidements de fixation (26b - 26f, 28b - 28f, 30b - 30f) sont disposés au moins en partie dans une paroi latérale (66b - 66f) qui limite latéralement le conduit de guidage longitudinal (18b - 18f).

3. Dispositif d'essuyage selon au moins la revendication 1, **caractérisé en ce que** l'adaptateur de balai d'essuie-glace (12a) présente au moins un élément d'encliquetage (40a, 42a) qui s'applique contre l'élément de retenue (10a) sur un côté tourné vers la raclette de balai d'essuie-glace (46a, 48a) dans un état monté et qui est prévu pour éviter un déplacement de l'adaptateur de balai d'essuie-glace (12a) par rapport à l'élément de retenue (10a) dans une direction verticale (44a).

4. Dispositif d'essuyage selon au moins la revendication 1, **caractérisé en ce que** l'adaptateur de balai d'essuie-glace (12b - 12f) présente au moins un élément d'encliquetage (40b - 40f, 42b - 42f) qui s'applique latéralement contre l'élément de retenue (10b - 10f) dans un état monté et qui est prévu pour éviter un déplacement de l'adaptateur de balai d'essuie-glace (12b - 12f) par rapport à l'élément de retenue (10b - 10f) dans une direction longitudinale (22b - 22f) de l'élément de retenue (10b - 10f).

5. Dispositif d'essuyage selon la revendication 4, **caractérisé en ce que** l'élément d'encliquetage (40b - 40f, 42b - 42f) s'applique latéralement contre l'élément de ressort (20b - 20f) dans un état monté et est prévu pour éviter un déplacement de l'adaptateur de balai d'essuie-glace (12b - 12f) par rapport à l'élément de ressort (20b - 20f) dans une direction longitudinale (22b - 22f).

6. Dispositif d'essuyage selon au moins la revendication 4, **caractérisé en ce que** l'élément d'encliquetage (40b - 40d, 42b - 42d) est prévu, lors d'un montage, pour être articulé au moins essentiellement dans une direction d'essuyage (24b - 24d).

7. Dispositif d'essuyage selon au moins la revendication 4, **caractérisé en ce que** l'élément d'encliquetage (40c ; 40f, 42c ; 42f) présente au moins deux bras d'encliquetage (88c ; 88f, 90c ; 90f) connectés à l'adaptateur de balai d'essuie-glace (12c ; 12f) et qui sont prévus pour être articulés élastiquement à ressort.
